# DEMANDE DE BREVET EUROPEEN

(11) **EP 3 686 729 A1**
(43) Date de publication de la demande: **29.07.2020**
(21) Numéro de dépôt: 20153940.0
(22) Date de dépôt: 27.01.2020
(51) Int. Cl.: G06F 3/06

(54) **PROCÉDÉ DE COMMUNICATION DE DONNÉES, ET SYSTÈME POUR LA MISE EN OEUVRE DU PROCÉDÉ**

(30) Priorité: 28.01.2019 FR 1900713
(71) Demandeur: ATEME, 78140 Velizy Villacoublay (FR)
(72) Inventeur: CAPITAN, Jean-Michel, 91430 VAUHALLAN (FR)
(74) Mandataire: Plasseraud IP

(57) **Abrégé**

Un procédé de communication de données est proposé, qui comprend : configurer une première interface applicative couplée de manière opérationnelle à une interface de gestion de stockage de données, pour définir une correspondance entre un message de données applicatif et une zone d'adressage mémoire gérée par l'interface de gestion de stockage de données ; générer un message de commande de stockage de données sur la base de la zone d'adressage mémoire et du message de données applicatif ; et émettre, par la première interface applicative, vers l'interface de gestion de stockage de données le message de commande de stockage de données, pour transmettre, au travers de l'interface de gestion de stockage de données, le message de données applicatif vers une deuxième interface applicative.

## Description

### Domaine technique

La présente invention se rapporte à un procédé de communication de données, ainsi qu'à un dispositif et un système informatique pour la mise en œuvre de ce procédé. Elle s'applique notamment aux systèmes informatiques tant dans le domaine professionnel (serveurs, data centers, etc.) que dans le domaine grand public (ordinateurs individuels, ordinateurs personnels, etc.).

### Technique antérieure

Les ordinateurs ou les serveurs informatiques disposent en général de ports d'extension qui sont typiquement au format PCI-Express. Bien que très bien adaptés à la création de modules d'entrée/sortie ou d'accélération matérielle, ils ont pour inconvénient majeur d'être uniquement situés à l'arrière des machines, la façade des machines, à laquelle l'utilisateur fait face, étant en général pourvue d'emplacements de type disque dur permettant d'insérer des disques dur supplémentaires.

### Problème technique

Cette architecture matérielle rend l'accès aux ports d'extension difficile, notamment lorsque le serveur est monté sur un support (en anglais, un « rack »), ce qui en restreint considérablement l'usage.

Un objet de la présente invention est de remédier au moins partiellement aux inconvénients précités.

Selon un premier aspect, il est proposé un procédé de communication de données, comprenant : configurer une première interface applicative couplée de manière opérationnelle à une interface de gestion de stockage de données, pour définir une correspondance entre un message de données applicatif et une zone d'adressage mémoire accessible (adressée) (gérée) par l'interface de gestion de stockage de données ; générer un message de commande de stockage de données sur la base de la zone d'adressage mémoire et du message de données applicatif ; et émettre, par la première interface applicative, vers l'interface de gestion de stockage de données le message de commande de stockage de données, pour transmettre, au travers de l'interface de gestion de stockage de données, le message de données applicatif vers une deuxième interface applicative.

Le procédé proposé permet avantageusement d'utiliser tout port d'extension pour l'utilisation d'un disque dur supplémentaire situé en façade d'un ordinateur ou d'un serveur informatique, pour y connecter un module applicatif, comme par exemple un module de traitement de données, et mettre ainsi en œuvre sur l'ordinateur ou le serveur une application correspondante (comme par exemple une application de cryptage/décryptage de flux vidéo). Par exemple, un port d'extension de type SATA peut être utilisé pour y connecter un module d'une autre nature qu'un module de stockage de données pour lequel le port SATA est initialement prévu, et ce de manière transparente pour le contrôleur SATA installé sur la machine, c'est-à-dire sans qu'il soit nécessaire de prévoir une interface logicielle spécifique avec ce contrôleur SATA.

Un avantage du procédé proposé tient ainsi au fait qu'il s'appuie sur les couches SATA standards du logiciel d'exploitation de l'hôte (ordinateur ou serveur sur lequel une ou plusieurs interfaces SATA sont configurées), sans qu'il soit nécessaire d'en modifier le pilote (en anglais, « driver ») ou les couches basses, ni de générer un driver spécifique. L'utilisation du procédé proposé est ainsi complètement transparente pour l'hôte.

Les caractéristiques exposées dans les paragraphes suivants peuvent, optionnellement, être mises en œuvre. Elles peuvent être mises en œuvre indépendamment les unes des autres ou en combinaison les unes avec les autres :

Dans un ou plusieurs modes de réalisation, le message de commande de stockage de données peut être une requête d'écriture de données correspondant au message de données applicatif dans la zone d'adressage.

Dans un ou plusieurs modes de réalisation, le message de données applicatif peut être encapsulé dans les données écrites dans la zone d'adressage.

Dans un ou plusieurs modes de réalisation, le procédé proposé peut en outre comprendre : configurer une deuxième interface applicative pour définir une correspondance entre un message de données applicatif et une zone d'adressage mémoire gérée par l'interface de gestion de stockage de données ; recevoir, depuis l'interface de gestion de stockage de données, un message de commande de stockage de données ; et obtenir, sur la base de la zone d'adressage mémoire et du message de commande de stockage de données, le message de données applicatif en provenance d'une première interface applicative.

Dans un ou plusieurs modes de réalisation, le message de commande de stockage de données peut être une requête de lecture de données correspondant au message de données applicatif dans la zone d'adressage.

Dans un ou plusieurs modes de réalisation, le message de données applicatif peut être encapsulé dans les données lues dans la zone d'adressage.

Avantageusement, le procédé peut être mis en œuvre de sorte que toute l'encapsulation se passe au niveau « applicatif », rendant le procédé utilisable sur toutes les machines disposant d'un ou plusieurs emplacements de stockage conformes au standard d'interface SATA.

Selon un autre aspect, un dispositif est proposé, qui comprend une deuxième unité d'interface applicative comprenant une interface de communication de données couplée de manière opérationnelle à un processeur, dans lequel le processeur est configuré pour, lorsque la deuxième unité d'interface applicative est couplée à une interface de gestion de stockage de données d'un système informatique, mettre en œuvre un ou plusieurs modes de réalisation du procédé proposé.

Dans un ou plusieurs modes de réalisation du dispositif, la deuxième unité d'interface applicative est configurée pour, lorsque la deuxième unité d'interface applicative est couplée à l'interface de gestion de stockage de données du système informatique, échanger des données avec une première unité d'interface applicative configurée pour être mise en œuvre par un processeur du système informatique, les première et deuxième unités d'interface applicative formant respectivement des première et deuxième interfaces applicatives de l'interface de gestion de stockage de données.

Dans un ou plusieurs modes de réalisation, le dispositif comprend en outre une unité applicative couplée de manière opérationnelle à la deuxième unité d'interface applicative, et configurée pour la mise en œuvre d'une application de traitement de données à traiter reçues de la deuxième unité d'interface applicative.

Dans un ou plusieurs modes de réalisation du dispositif proposé, l'unité applicative est configurée pour effectuer un traitement d'un flux vidéo reçu de la deuxième unité d'interface applicative, le traitement étant relatif à un ou plusieurs traitements parmi la compression, la décompression, l'encodage, le décodage, l'encryptage et le décryptage.

Un autre aspect concerne Unité d'interface applicative, configurée pour, lorsque l'unité d'interface applicative est mise en œuvre par un processeur d'un système informatique, mettre en œuvre un procédé de communication de données selon l'un des modes de réalisation proposés dans la présente demande.

Un autre aspect concerne un programme d'ordinateur, chargeable dans une mémoire associée à un processeur, et comprenant des portions de code pour la mise en œuvre d'un procédé tel que proposé dans la présente demande lors de l'exécution dudit programme par le processeur.

Un autre aspect concerne un ensemble de données représentant, par exemple par voie de compression ou d'encodage, un programme d'ordinateur tel que proposé dans la présente demande.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant un processeur couplé de manière opérationnelle à une mémoire et à une interface entrées/sorties de communication de données, conduire l'ordinateur à gérer un dispositif selon un procédé de communication de données selon l'un des modes de réalisation proposés dans la présente demande.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à mettre en œuvre un procédé de communication de données selon l'un des modes de réalisation proposés dans la présente demande.

### Brève description des dessins

D'autres particularités et avantages de la présente invention apparaîtront dans la description ci-après d'exemples de réalisation non limitatifs, en référence aux dessins annexés, dans lesquels :
**Fig. la**

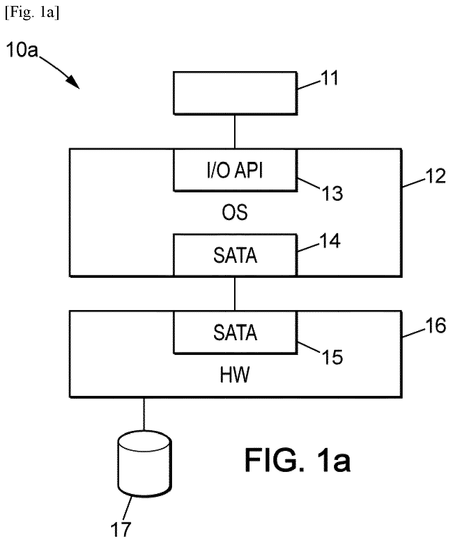

   [Fig. 1a] est un schéma illustrant un exemple de système de stockage de données utilisant un contrôleur SATA ;
**Fig. 1b**

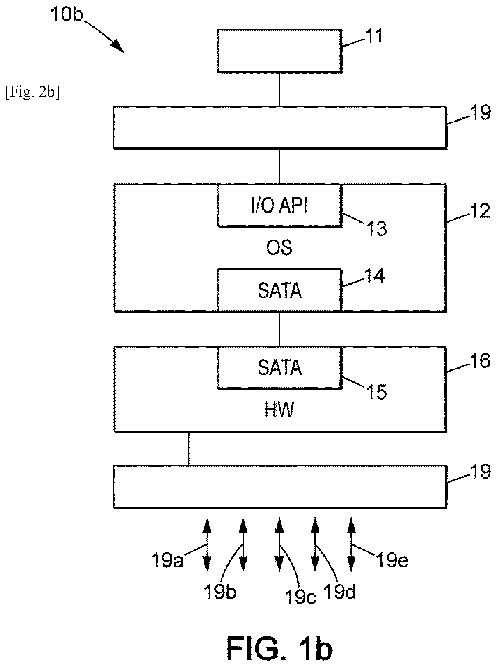

   [Fig. 1b] est un schéma illustrant un exemple de système selon un ou plusieurs modes de réalisation ;
**Fig. 2a**

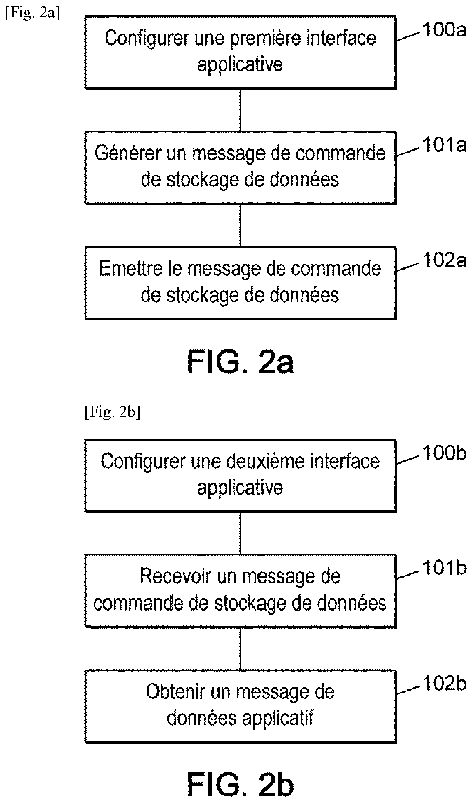

   [Fig. 2a] est un diagramme illustrant un procédé selon un ou plusieurs modes de réalisation ;
**Fig. 2b**
   [Fig. 2b] est un diagramme illustrant un procédé selon un ou plusieurs modes de réalisation ;
**Fig. 3a**

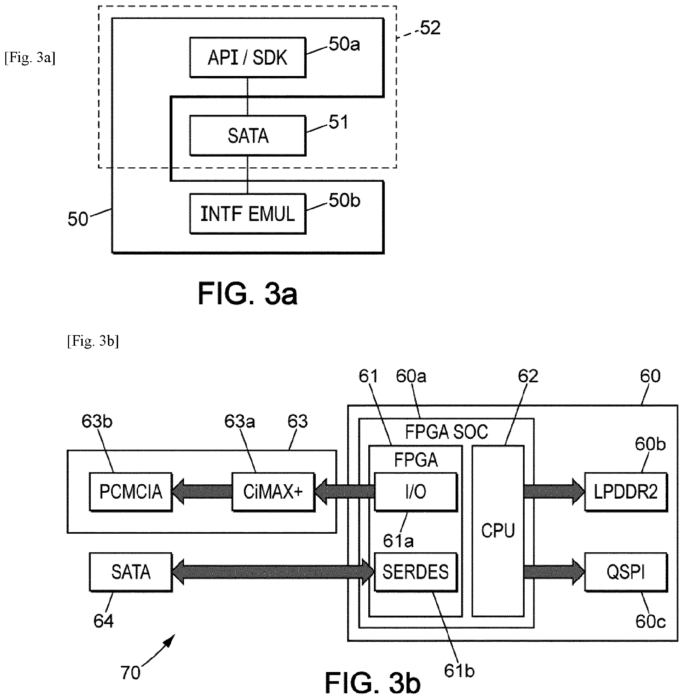

   [Fig. 3a] est un diagramme illustrant un système pour la mise en œuvre du procédé proposé selon un ou plusieurs modes de réalisation ;
**Fig. 3b**
   [Fig. 3b] est un diagramme illustrant un système pour la mise en œuvre du procédé proposé selon un ou plusieurs modes de réalisation ;
**Fig. 3c**

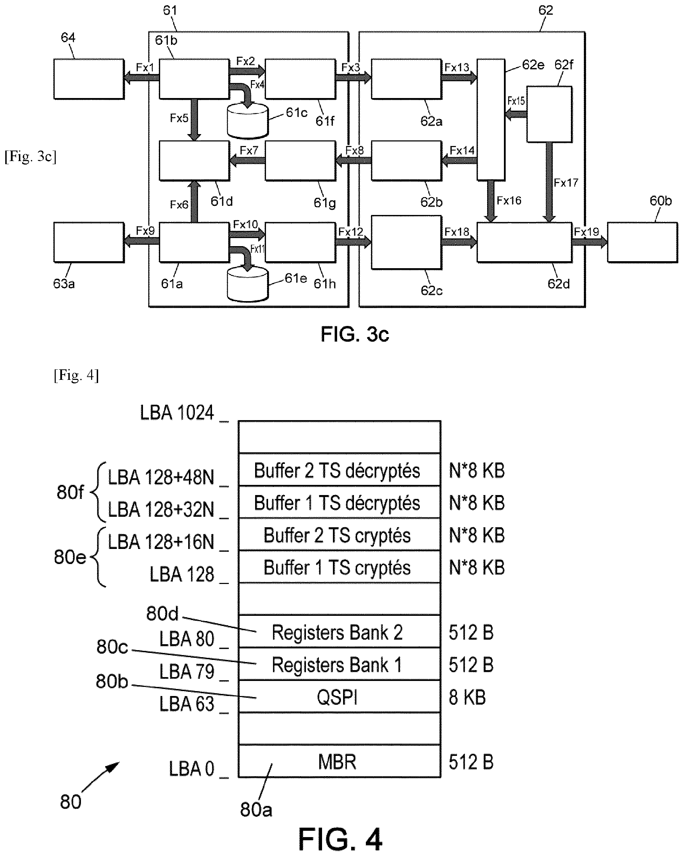

   [Fig. 3c] est un diagramme illustrant des flux de données mis en œuvre sur le système de la figure 3b selon un ou plusieurs modes de réalisation ;
**Fig. 4**
   [Fig. 4] illustre un exemple de mémoire virtuelle selon un ou plusieurs modes de réalisation du procédé proposé ;
**Fig. 5**

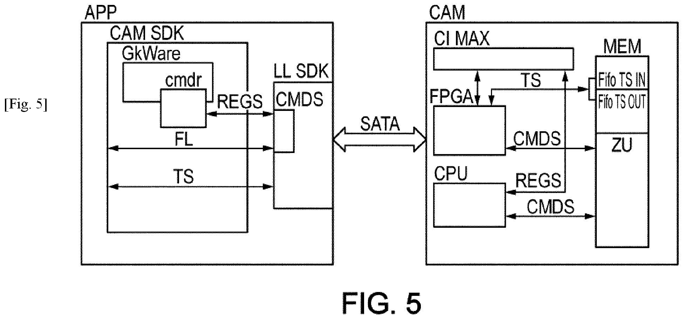

   [Fig. 5] est un diagramme illustrant un exemple d'architecture logicielle selon un ou plusieurs modes de réalisation du procédé proposé.

### Description des modes de réalisation

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la présente description.

La présente demande fait référence à des fonctions, moteurs, unités, modules, plateformes, et illustrations de diagrammes des méthodes et dispositifs selon un ou plusieurs modes de réalisation. Chacun des fonctions, moteurs, modules, plateformes, unités et diagrammes décrits peut être mis en œuvre sous forme matérielle, logicielle (y compris sous forme de logiciel embarqué («firmware»), ou de «middleware»), microcode, ou toute combinaison de ces derniers. Dans le cas d'une mise en œuvre sous forme logicielle, les fonctions, moteurs, unités, modules et/ou illustrations de diagrammes peuvent être mis en œuvre par des instructions de programme d'ordinateur ou du code logiciel, qui peut être stocké ou transmis sur un support lisible par ordinateur, incluant un support non transitoire, ou un support chargé en mémoire d'un ordinateur générique, spécifique, ou de tout autre appareil ou dispositif programmable de traitement de données pour produire une machine, de telle sorte que les instructions de programme d'ordinateur ou le code logiciel exécuté(es) sur l'ordinateur ou l'appareil ou dispositif programmable de traitement de données, constituent des moyens de mise en œuvre de ces fonctions.

Les modes de réalisation d'un support lisible par ordinateur incluent, de manière non exhaustive, des supports de stockage informatique et des supports de communication, y compris tout support facilitant le transfert d'un programme d'ordinateur d'un endroit vers un autre. Par «support(s) de stockage informatique», on entend tout support physique pouvant être accédé par ordinateur. Les exemples de support de stockage informatique incluent, de manière non limitative, les disques ou composants de mémoire flash ou tous autres dispositifs à mémoire flash (par exemple des clés USB, des clés de mémoire, des sticks mémoire, des disques-clés), des CD-ROM ou autres dispositifs de stockage optique de données, des DVD, des dispositifs de stockage de données à disque magnétique ou autres dispositifs de stockage magnétique de données, des composants de mémoire de données, des mémoires RAM, ROM, EEPROM, des cartes mémoires («smart cards»), des mémoires de type SSD («Solid State Drive»), et toute autre forme de support utilisable pour transporter ou stocker ou mémoriser des données ou structures de données qui peuvent être lues par un processeur d'ordinateur.

En outre, diverses formes de support lisible par ordinateur peuvent transmettre ou porter des instructions vers un ordinateur, telles qu'un routeur, une passerelle, un serveur, ou tout équipement de transmission de données, qu'il s'agisse de transmission filaire (par câble coaxial, fibre optique, fils téléphoniques, câble DSL, ou câble Ethernet), sans-fil (par infrarouge, radio, cellulaire, microondes), ou des équipements de transmission virtualisés (routeur virtuel, passerelle virtuelle, extrémité de tunnel virtuel, pare-feu virtuel). Les instructions peuvent, selon les modes de réalisation, comprendre du code de tout langage de programmation informatique ou élément de programme informatique, tel que, sans limitation, les langages assembleur, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, et bash scripting.

De plus, les termes «notamment», «par exemple», «exemple», «typiquement» sont utilisés dans la présente description pour désigner des exemples ou illustrations de modes de réalisation non limitatifs, qui ne correspondent pas nécessairement à des modes de réalisation préférés ou avantageux par rapport à d'autres aspects ou modes de réalisation possibles.

Par «serveur» ou «plateforme», on entend dans la présente demande tout point de service (virtualisé ou non) ou dispositif opérant des traitements de données, une ou plusieurs bases de données, et/ou des fonctions de communication de données. Par exemple, et de manière non limitative, le terme «serveur» ou le terme «plateforme» peut faire référence à un processeur physique couplé de manière opérationnelle avec des fonctions de communication, de base de données et de stockage de données associées, ou faire référence à un réseau, un groupe, un ensemble ou un complexe de processeurs et des équipements de stockage de données et de mise en réseau associés, ainsi qu'un système d'exploitation et un ou plusieurs système(s) de base de données et des logiciels applicatifs en support des services et fonctions fournies par le serveur. Un dispositif informatique peut être configuré pour envoyer et recevoir des signaux, par réseau(x) de transmission sans-fil et/ou filaire, ou peut être configuré pour des traitements et/ou du stockage de données ou de signaux, et peut donc fonctionner en tant que serveur. Ainsi, des équipements configurés pour opérer en tant que serveur peuvent inclure, à titre d'exemples non limitatifs, des serveurs dédiés montés sur rack, des ordinateurs de bureau, des ordinateurs portables, des passerelles de service (parfois appelées «box» ou «passerelle résidentielle»), des décodeurs multimédia (parfois appelés «set-top boxes»), des équipements intégrés combinant diverses fonctionnalités, telles que deux ou plus des fonctionnalités mentionnées ci-dessus. Les serveurs peuvent fortement varier dans leur configuration ou leurs capacités, mais un serveur inclura généralement une ou plusieurs unité(s) centrale(s) de traitement et une mémoire. Un serveur peut aussi inclure un ou plusieurs équipement(s) de mémoire de masse, une ou plusieurs alimentation(s) électrique(s), une ou plusieurs interface(s) réseau sans-fil et/ou filaire(s), une ou plusieurs interface(s) d'entrée/sortie, un ou plusieurs système(s) d'exploitation, tel(s) que Windows Server, Mac OS X, Unix, Linux, FreeBSD, or un équivalent.

Les termes «réseau» et «réseau de communication» tels qu'utilisés dans la présente demande font référence à une ou plusieurs liaisons de données qui peuvent coupler ou connecter des équipements, éventuellement virtualisés, de manière à permettre le transport de données électroniques entre des systèmes informatiques et/ou des modules et/ou d'autres dispositifs ou équipements électroniques, tel qu'entre un serveur et un dispositif client ou d'autres types de dispositifs, y compris entre dispositifs sans fil couplés ou connectés par un réseau sans fil, par exemple. Un réseau peut aussi inclure une mémoire de masse pour stocker des données, tel qu'un NAS (en anglais «network attached storage», un SAN (en anglais «storage area network»), ou toute autre forme de support lisible par un ordinateur ou par une machine, par exemple. Un réseau peut comprendre, en tout ou partie, le réseau Internet, un ou plusieurs réseaux locaux (en anglais «local area networks», ou LANs), un ou plusieurs réseaux de type WAN (en anglais «wide area networks»), des connexions de type filaire, des connexions de type sans fil, de type cellulaire, ou toute combinaison de ces différents réseaux. De manière similaire, des sous-réseaux peuvent utiliser différentes architectures ou être conformes ou compatibles avec différents protocoles, et inter-opérer avec des réseaux de plus grande taille. Différents types d'équipements peuvent être utilisés pour rendre interopérables différentes architectures ou différents protocoles. Par exemple, un routeur peut être utilisé pour fournir une liaison de communication ou une liaison de données entre deux LANs qui seraient autrement séparés et indépendants.

Les termes «couplé de manière opérationnelle», «couplé», «monté», «connecté» et leurs variantes et formes diverses utilisés dans les présentes font référence à des couplages, connexions, montages, qui peuvent être directs ou indirects, et comprennent notamment des connexions entre équipements électroniques ou entre des portions de tels équipements qui permettent des opérations et fonctionnements tels que décrits dans la présente demande. De plus, les termes «connectés» et «couplés» ne sont pas limités à des connections ou des couplages physiques ou mécaniques. Par exemple, un couplage de manière opérationnelle peut inclure une ou plusieurs connexion(s) filaire(s) et/ou une ou plusieurs connexion(s) sans-fil entre deux équipements ou plus qui permettent des liaisons de communication simplex et/ou duplex entre les équipements ou des portions des équipements. Selon un autre exemple, un couplage opérationnel ou une connexion peut inclure un couplage par liaison filaire et/ou sans-fil pour permettre des communications de données entre un serveur du système proposé et un autre équipement du système.

La figure la illustre un exemple de système (10a) de stockage de données utilisant un contrôleur SATA (de l'anglais « Serial Advance Technology Attachment »). Le contrôleur SATA est utilisé sur les ordinateurs pour connecter des périphériques de stockage de données (disque dur mécanique, SSD, lecteur de DVD, etc.), par l'intermédiaire d'une interface de gestion de stockage de données de type SATA spécifiée par l'organisation Serial ATA.

On pourra se reporter à la spécification technique intitulée « Sériai ATA Revision 3.4 Spécification », publiée en juin 2018, pour une description détaillée des spécifications SATA. L'homme du métier comprendra toutefois que les procédés, systèmes et dispositifs proposés dans la présente description ne sont pas limités à une version particulière de la spécification SATA, ni même à une interface de gestion de stockage de données de type SATA, mais peuvent être mis en œuvre avec tout type d'interface de gestion de stockage de données.

Le système (10a) illustré sur la figure la comprend une unité logiciel applicatif (11) couplée par un lien de communication de données (qui peut être mis en œuvre sous forme logicielle, matérielle, ou comme une combinaison de logiciel et de matériel) à une unité système d'exploitation (12) (en anglais OS, pour « Operating System »), par l'intermédiaire d'une interface de programmation applicative (13) (en anglais, « API », pour «Application Programming Interface ») configurée pour fournir une interface d'entrée/sortie fichiers pour la communication de données entre l'unité logiciel applicatif (11) et l'unité système d'exploitation (12).

L'unité système d'exploitation (12) est configurée pour contrôler un logiciel de pilotage d'interface SATA (14) (en anglais, « SATA Driver »), qui est configuré pour piloter un contrôleur matériel de type SATA (15) parmi d'autres éléments matériels du système (10a), par exemple incorporé à une carte-mère (16) d'ordinateur. Le logiciel de pilotage d'interface SATA (14) peut être configuré pour être exécuté sur le contrôleur matériel de type SATA (15) et/ou tout processeur ou ensemble de processeurs dont la carte-mère (16) est munie.

Une unité de stockage de données (17), comme par exemple un disque dur (disque dur mécanique, SSD, etc.), est connectée à la carte-mère (16) pour être pilotée par le contrôleur SATA (15), qui est configuré pour contrôler les actions effectuées sur l'unité de stockage de données (17) (comme par exemple l'écriture, la lecture, l'effacement de données sur l'unité de stockage de données). La connexion entre l'unité de stockage de données (17) et la carte-mère (16) peut utiliser un câble muni de connecteurs matériels conformes aux spécifications SATA.

La figure 1b est un schéma illustrant un ou plusieurs modes de réalisation dans lesquels un système (10b) comprend, outre l'unité logiciel applicatif (11), l'unité système d'exploitation (12), l'interface de programmation applicative (13), le logiciel de pilotage d'interface SATA (14), le contrôleur SATA (15), et la carte-mère (16) illustrés sur la figure 1a, une unité de transcodage de données (18) et une unité d'émulation (19), comprenant éventuellement une ou plusieurs interfaces d'entrée/sortie (19a, 19b, 19c, 19d, 19e).

L'unité d'émulation (19) est configurée, dans un ou plusieurs modes de réalisation, pour émuler, du point de vue de son interface avec le contrôleur SATA (15), une unité de stockage de données, telle que l'unité (17) illustrée sur la Figure la. Ainsi, le contrôleur SATA (15) « voit » une unité de stockage de données par l'intermédiaire de son interface avec l'unité d'émulation, et traite l'ensemble des données en provenance ou à destination de l'unité d'émulation (19) comme s'il s'agissait d'une unité de stockage de données.

L'unité de transcodage de données (18) est configurée, dans un ou plusieurs modes de réalisation, pour transformer les données issues et/ou en provenance de l'unité logiciel applicatif (11) afin qu'elles soient traitées de manière transparente par le logiciel de pilotage d'interface SATA (14) et le contrôleur SATA (15).

Dans un ou plusieurs modes de réalisation, l'unité de transcodage de données (18) peut être configurée pour transformer les données par encapsulation/désencapsulation, de manière à encapsuler des données issues de l'unité logiciel applicatif (11) dans des messages conformes aux spécifications SATA, et/ou à désencapsuler des données issues de l'interface de programmation applicative (13) en provenance du logiciel de pilotage d'interface SATA (14) pour les extraire des messages conformes aux spécifications SATA.

Les systèmes et procédés proposés permettent ainsi avantageusement d'utiliser un emplacement sur la façade d'un ordinateur prévu pour accueillir une unité de stockage de données (telle que, par exemple, un disque dur) pour une application autre que le stockage de données, et ce de manière complètement transparente pour le contrôleur matériel SATA et le pilote logiciel SATA configurés pour gérer une unité de stockage de données installée dans (ou, selon les cas, sur) l'emplacement.

On décrit ci-après des procédés de communication de données dans un système tel que celui illustré sur la figure 1b, dans un ou plusieurs modes de réalisation.

En référence à la figure 2a, la configuration (100a) d'une première interface applicative comprend la définition d'au moins une correspondance entre un message de données applicatif et une zone d'adressage mémoire accessible par une interface de gestion de stockage de données.

Dans un ou plusieurs modes de réalisation, une table de correspondance entre messages de données applicatifs et zones d'adressage mémoire définies dans une mémoire virtuelle adressable par l'interface de gestion de stockage de données (par exemple par une interface SATA comprenant un logiciel pilote et un contrôleur) peut être préconfigurée et stockée dans une mémoire de la première interface applicative.

En référence à la figure 1b, dans un ou plusieurs modes de réalisation, la première interface applicative peut correspondre à l'unité de transcodage de données (18), et l'interface de gestion de stockage de données peut correspondre à une interface SATA, comprenant une partie matérielle qui comprend un contrôleur SATA (15), et une partie logicielle qui comprend un logiciel de pilotage d'interface SATA (14).

Une fois définie au moins une correspondance entre un message de données applicatif et une zone d'adressage mémoire accessible par une interface de gestion de stockage de données, un message de commande de stockage de données est généré (101a) sur la base de la zone d'adressage mémoire et du message de données applicatif.

Le message de commande de stockage de données est ensuite émis (102a), par la première interface applicative, vers l'interface de gestion de stockage de données, afin de transmettre, au travers de l'interface de gestion de stockage de données, le message de données applicatif vers une deuxième interface applicative.

Dans un ou plusieurs modes de réalisation, les première et deuxième interfaces applicatives peuvent être configurées pour être utilisées respectivement de part et d'autre de l'interface de gestion de stockage de données. Par exemple, dans les modes de réalisation dans lesquels l'interface de gestion de stockage de données est de type SATA, la première interface applicative peut être configurée pour être utilisée en interface de logiciel de pilotage SATA, tandis que la deuxième interface applicative peut être configurée pour être utilisée en interface du contrôleur matériel SATA.

Dans un ou plusieurs modes de réalisation, le message de commande de stockage de données peut correspondre à une requête d'écriture de données dans la zone d'adressage mémoire, les données correspondant au message de données applicatif.

Dans un ou plusieurs modes de réalisation, le message de données applicatif est encapsulé dans le message de commande de stockage de données, de sorte que les données du message de données applicatif sont insérées dans les données utiles (en anglais, « payload ») du message de commande de stockage de données.

En référence à la figure 2b, la configuration (100b) d'une deuxième interface applicative comprend la définition d'au moins une correspondance entre un message de données applicatif et une zone d'adressage mémoire accessible par une interface de gestion de stockage de données.

Dans un ou plusieurs modes de réalisation, une table de correspondance entre messages de données applicatifs et zones d'adressage mémoire définies dans une mémoire virtuelle adressable par l'interface de gestion de stockage de données (par exemple par une interface SATA comprenant un logiciel pilote et un contrôleur) peut être préconfigurée et stockée dans une mémoire de la deuxième interface applicative.

En référence à la figure 1b, dans un ou plusieurs modes de réalisation, la deuxième interface applicative peut correspondre à l'unité d'émulation (19), et l'interface de gestion de stockage de données peut correspondre à une interface SATA, comprenant une partie matérielle qui comprend un contrôleur SATA (15), et une partie logicielle qui comprend un logiciel de pilotage d'interface SATA (14).

Une fois définie au moins une correspondance entre un message de données applicatif et une zone d'adressage mémoire accessible par une interface de gestion de stockage de données, un message de commande de stockage de données est reçu (101b) depuis l'interface de gestion de stockage de données.

Le message de données applicatif, en provenance d'une première interface applicative, est ensuite obtenu (102b) à la deuxième interface applicative sur la base de la zone d'adressage mémoire et du message de commande de stockage de données.

A nouveau, les première et deuxième interfaces applicatives peuvent être configurées pour être utilisées respectivement de part et d'autre de l'interface de gestion de stockage de données. Par exemple, dans les modes de réalisation dans lesquels l'interface de gestion de stockage de données est de type SATA, la première interface applicative peut être configurée pour être utilisée en interface de logiciel de pilotage SATA, tandis que la deuxième interface applicative peut être configurée pour être utilisée en interface du contrôleur matériel SATA.

La figure 3a est un diagramme illustrant un système (50) pour la mise en œuvre du procédé proposé selon un ou plusieurs modes de réalisation.

Le système illustré (50) comprend une première unité d'interface applicative (50a) et une deuxième unité d'interface applicative (50b), configurées pour être utilisées de part et d'autre d'une unité de gestion de stockage de données de type SATA (51), comme illustré sur la figure 3a. L'unité de gestion de stockage de données de type SATA (51) comprend typiquement un contrôleur SATA et un pilote SATA, non représentés sur la figure, et forme une interface de gestion de stockage de données. La première unité (50a) forme ainsi une première interface applicative couplée de manière opérationnelle à l'unité de gestion de stockage de données de type SATA (51), par exemple au pilote SATA, tandis que deuxième unité (50b) forme une deuxième interface applicative couplée de manière opérationnelle à l'unité de gestion de stockage de données de type SATA (51), par exemple au contrôleur SATA.

En fonction des modes de réalisation choisis, les première et deuxième unités d'interface applicative peuvent chacune être mise en œuvre sous forme logicielle, auquel cas l'unité d'interface applicative prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant de type FPGA (Field Programmable Gate Array). Les SOC (System On Chip) ou systèmes sur puce sont des systèmes embarqués qui intègrent des composants d'un système électronique dans une puce unique. Une unité d'interface applicative peut également utiliser des architectures hybrides, comme par exemple des architectures basées sur un CPU+FPGA, un GPU (Graphics Processing Unit) ou un MPPA (Multi-Purpose Processor Array).

Par exemple, dans un ou plusieurs modes de réalisation, la première unité d'interface applicative (50a) pourra être mise en œuvre sous la forme d'un ou plusieurs logiciels configurés pour être exécutés par un ou plusieurs processeurs, comme exemple un processeur d'un ordinateur (52) (typiquement un serveur) sur lequel la première unité d'interface applicative (50a) et unité de gestion de stockage de données de type SATA (51) sont mis en œuvre. Dans ce cas de figure, la première unité d'interface applicative (50a) pourra comprendre une ou plusieurs librairies de développement logiciel (par exemple sous la forme d'une SDK (de l'anglais « Software Development Kit »)) configurées pour une application donnée, ainsi qu'une interface logicielle (par exemple sous la forme d'une interface de programmation d'application (API)), elle aussi configurée pour l'application envisagée de manière à fournir une interface de communication de données avec un logiciel applicatif correspondant à cette application envisagée. La première unité d'interface applicative (50a) pourra ainsi comprendre un ou plusieurs logiciels configurés pour la mise en œuvre du procédé proposé dans la présente description pour ce qui concerne la première interface. En particulier, la première unité d'interface applicative (50a) pourra comprendre un ou plusieurs logiciels configurés pour effectuer l'encapsulation de messages et/ou de données applicatives dans des messages spécifiés pour être utilisés avec l'unité de gestion de stockage de données de type SATA (51), et la désencapsulation de messages et/ou de données applicatives encapsulés dans des messages spécifiés pour être utilisés avec l'unité de gestion de stockage de données de type SATA (51).

Par exemple, dans un ou plusieurs modes de réalisation, la deuxième unité d'interface applicative (50b) pourra être mise en œuvre sous la forme d'une combinaison de matériels et de logiciels comprenant un composant FPGA et un processeur, configurée pour la mise en œuvre du procédé proposé dans la présente description pour ce qui concerne la deuxième interface. En particulier, la deuxième unité d'interface applicative (50b) pourra comprendre une combinaison de matériels et de logiciels configurés pour émuler un support de stockage de données, afin d'échanger des données avec la première unité d'interface applicative (50a) de manière transparente pour l'unité de gestion de stockage de données de type SATA (51). La deuxième unité d'interface applicative (50b) pourra donc comprendre, dans un ou plusieurs modes de réalisation, une interface matérielle (et notamment une connectique) conforme aux spécifications SATA, de manière être physiquement connectée à l'unité de gestion de stockage de données de type SATA (51) de la même manière que le serait un support de stockage de données conforme aux spécifications SATA.

Un des avantages des systèmes proposés tient au fait qu'il peut être utilisé sur n'importe quel type d'ordinateur ou de système informatique doté d'une interface de gestion de stockage de données de type SATA, ce qui est le cas de la très grande majorité des systèmes informatiques existants. En particulier, les procédés et systèmes proposés ne requièrent pas de développer une interface spécifique au pilote SATA utilisé par le système informatique sur lequel ils sont utilisés, car ils utilisent ou incluent une interface applicative couplée de manière opérationnelle à l'interface SATA, et en particulier au pilote SATA configuré sur l'interface SATA. Les systèmes proposés sont donc avantageusement transposables et réutilisables sur n'importe quelle machine informatique incorporant une interface SATA (comprenant typiquement une couche matérielle SATA et une couche logicielle SATA).

La figure 3b est un diagramme illustrant un exemple de mode de réalisation d'un système (70) configuré pour la mise en œuvre du procédé proposé dans le cadre non limitatif d'une application de traitement de flux vidéo. Le système illustré sur la figure 3b comprend un dispositif (60), qui peut correspondre dans un ou plusieurs modes de réalisation à l'unité d'émulation (19) illustrée sur la figure 1b, ou à la deuxième unité d'interface applicative (50b) illustrée sur la figure 3a.

Dans ce contexte, le(s) message(s) applicatif(s) transmis entre les première (50a) et deuxième (50b) interfaces applicatives peuvent inclure des messages de traitement de flux vidéo. On décrit ci-après l'exemple non limitatif d'un traitement de flux vidéo de type encryptage/décryptage de flux vidéo.

En effet, le procédé proposé permet avantageusement de réaliser un module de décryptage de flux vidéo compressés et encryptés (en anglais, « Transport Stream », ou « TS »), via l'utilisation de modules d'accès contenus (en anglais « Content Access Module », ou « CAM »), par exemple au format PCMCIA, dans lesquels sont insérées des cartes à puce. De tels modules CAM sont d'usage courant dans les domaines de la distribution de contenus ou de la diffusion de contenus, par exemple pour décrypter des flux vidéo encryptés et transmis par satellite, de sorte qu'il est particulièrement avantageux de pouvoir utiliser les emplacements SATA situés en face avant des serveurs vidéo pour y insérer des modules CAM configurés pour décrypter des flux vidéo reçus en utilisant des informations fournies par la carte à puce insérée dans chaque module.

Chaque emplacement SATA sur un serveur est configuré pour être piloté par un contrôleur SATA, qui peut être mise en œuvre sous forme matérielle, sous forme logicielle, ou sous forme d'une combinaison de logiciel et de matériel. Certains serveurs correspondant à une unité de rack (1U ou 1RU) peuvent comporter jusqu'à huit emplacements SATA en face avant. Les cartes à puce sont quasiment impossibles à utiliser pour un utilisateur si elles sont situées en face arrière sur serveur 1RU une fois que celui-ci est monté dans un rack de serveurs. De plus, il peut être avantageux d'utiliser plusieurs modules CAM dans un même serveur de traitement de flux vidéo, et le procédé proposé permet alors d'utiliser plusieurs emplacements SATA, voire tous les emplacements SATA, situés en face avant du serveur 1RU pour effectuer en parallèle du décryptage de flux vidéo.

Le mode de réalisation non limitatif du dispositif (60) illustré sur la figure 3B est basé sur l'utilisation d'un composant programmable de type FPGA SOC (60a), comprenant un cœur FPGA (61) et une unité centrale de traitement (62) (en anglais, « central processing unit », ou « CPU ») comprenant un ou plusieurs processeurs. Le dispositif (60) illustré comprend en outre une ou plusieurs mémoires (60b, 60c), par exemple de type mémoire flash série (60a) (par exemple de type «interface périphérique série quad », de l'anglais « Quad Serial Peripheral Interface », ou « QPSI »), et/ou de type mémoire dynamique (60b) (par exemple de type « débit de données double à basse énergie 2 », de l'anglais « Low Power Double Data Rate 2 », ou « LPDDR2)).

Dans un ou plusieurs modes de réalisation, le cœur FPGA (61) peut comprendre un module d'entrées/sorties (61a) configuré pour un couplage du dispositif (60) avec un module CAM (63), ainsi qu'un module d'interface de communication de données à haut débit (61b), par exemple de type émetteur/récepteur série (de l'anglais Serializer/Deserializer transceiver, ou « SerDes Transceiver »), couplé à un connecteur (64) compatible SATA. Dans un ou plusieurs modes de réalisation, le cœur FPGA (61) peut ainsi être configuré pour gérer les interfaces de données SATA et CAM, par exemple sous la forme d'un processus décrit dans un langage de description de matériel (par exemple de type VHDL (de l'anglais « VHSIC hardware Description Language », VHSIC étant l'acronyme de « Very-High Speed Integrated Circuits »)).

L'unité centrale de traitement (62) peut être configurée pour effectuer l'encapsulation et la désencapsulation des transferts de données utiles et de données de commandes/signalisation, en lien avec les interfaces (61a, 61b) gérées par le cœur FPGA (61).

Sur la figure 3a, le module CAM (63) est configuré pour la mise en œuvre d'une interface normative CAM, par le biais d'un connecteur PCMCIA (63b) prévu pour y introduire une carte à puce, et un module de décrypage « CiMax+ » (63a).

Dans un ou plusieurs modes de réalisation, le dispositif (60) peut être configuré pour être utilisé comme unité d'interface applicative pour la mise en œuvre du procédé proposé, en étant connecté à un port SATA d'un système informatique par le biais du connecteur (64), et d'autre part à un module CAM (63) pour fournir l'application de cryptage et/ou décryptage de flux vidéo.

Le dispositif (60) peut en outre avantageusement être agencé pour être de dimensions et de forme correspondant à un emplacement SATA situé en face avant d'un système informatique, de manière à utiliser l'emplacement SATA comme le ferait un module de stockage de données additionnel pour lequel l'emplacement SATA est prévu. Par exemple, le dispositif (60) pourra être configuré pour être conforme aux spécifications matérielles d'un emplacement SATA prévu pour un disque dur d'extension en face avant d'un serveur, y compris lorsqu'une carte à puce est insérée dans le module CAM (63) par le biais du slot PCMCIA (63b).

Comme expliqué ci-dessus, le dispositif (60) peut ainsi avantageusement être configuré pour émuler un module de stockage de données, et interfonctionner avec l'interface SATA avec laquelle il est connecté de manière transparente pour le contrôleur et le pilote SATA de cette interface.

En fonction de l'application choisie (dans l'exemple illustré sur la figure 3a, le cryptage/décryptage de flux vidéo), le système informatique sera configuré avec une couche logicielle applicative correspondant à cette application, et notamment avec une unité d'interface applicative configurée pour la mise en œuvre, au sein du système informatique, du procédé proposé pour l'application choisie.

Dans le contexte d'une application de décryptage, le flux de données principal concerne les paquets de données du flux vidéo à décrypter via le module de décryptage (63a) du module CAM (63). La figure 3c illustre des flux de données mis en œuvre sur le système (70) de la figure 3b.

En référence à la figure 3c, les données Fxl transmises depuis le contrôleur SATA (61b) vers le connecteur SATA (64) transitent sur un bus bidirectionnel (Emission et réception - Tx/Rx) de type SATA. Le contrôleur SATA (61b) a par ailleurs accès (Fx5) à des registres (61d), auxquels le contrôleur CAM (61a) a également accès (Fx6). Le flux de données Fx2 est émis par la couche transport du protocole SATA, et transitent par un maître bus d'interface FPGA (61f) pour être transmises (Fx3) à un module de jonction (62a) entre le FPGA (61) et le CPU (62). Le FPGA (61) comprend par ailleurs un ou plusieurs mémoires tampons (61c, 61e), accessibles depuis le contrôleur SATA (61b), et depuis le contrôleur CAM (61a), respectivement, par des bus respectifs interface de mémoire SRAM (par exemple double ports) (Fx4, Fx11). L'entité d'interconnexion de couche 3 (transport) (62e) est configurée pour recevoir des données (Fx13) depuis le module de jonction (62a) entre le FPGA (61) et le CPU (62) qui transitent sur un bus d'interconnexion pour les transferts de données entre le FPGA et le contrôleur SDRAM ou le processeur (62f), et fournir des données (Fx14) qui transitent sur un bus d'interconnexion pour les transferts de données entre le FPGA et le processeur (62f) au module de jonction (62c) entre le CPU (62) et le FPGA (61), qui transitent vers les registres (61d) du FPGA (61) par le bus (Fx7) par le biais d'un bus esclave FPGA et CPU maître (Fx8).

les données (Fx9) transmises depuis le contrôleur CAM (61a) vers le module de décryptage (CIMAX+) (63a) transitent sur un bus bidirectionnel de données (par exemple 8-bit) de transfert de flux vidéo TS (MPEG Transport Stream) vers le CAM. Le contrôleur CAM (61a) a par ailleurs accès (Fx6) à des registres (61d), comme indiqué ci-dessus, ainsi qu'à une mémoire tampon (buffer) (61e) pour y stocker des données de flux vidéo (Fx11). Les données de flux vidéo sont transmises par le contrôleur CAM vers le FPGA (flux de données Fx10) sur un bus d'interface entre le buffer de stockage des flux TS et un maître bus (61h) pour être transmises (Fx12) à un module de jonction (62c) entre le FPGA (61) et le CPU (62).

Le contrôleur de mémoire SDRAM reçoit des données (Fx16) depuis l'entité d'interconnexion de couche 3 (transport) (62e), depuis (Fx18) le module de jonction (62c) entre le FPGA (61) et le CPU (62), et depuis (Fx17) le processeur (62f). Le processeur (62f) est par ailleurs couplé aux modules de jonction (62a, 62c) par le biais (Fx15) de l'entité d'interconnexion de couche 3 (transport) (62e), et peut stocker des données (Fx19) dans la mémoire (60b) (par exemple de type SDRAM LPDDR2) qui transitent sur un bus interface de mémoire SDRAM LPDDR2.

Comme décrit ci-dessus, le dispositif (60) peut être configuré pour émuler une interface de disque de stockage de données conforme aux spécifications SATA. La figure 4 illustre un exemple de mémoire virtuelle selon un ou plusieurs modes de réalisation du procédé proposé.

Le disque virtuel (80) émulé par le dispositif (60) peut par exemple être de capacité 512 Mo, et découpé en régions fonctionnelles (par le biais d'un adressage de blocs logiques (en anglais, « Logical Block Addressing », ou « LBA »)) comme illustré sur la figure 4. Dans un ou plusieurs modes de réalisation, ce disque virtuel (80) peut être utilisé pour définir des correspondances respectives entre des messages applicatifs et des espaces adressables par un contrôleur SATA d'une interface SATA. Ainsi, des messages applicatifs peuvent être mappés sur des zones respectives d'une mémoire virtuelle, chacune correspondant à un espace de stockage SATA. Des données relatives aux disque émulé (taille, disque non formatté (sans partition)) sont consignées dans un « Master Boot Record » (80a) situé à l'adresse LBA 0.

Dans un ou plusieurs modes de réalisation, un espace d'adressage (ou une zone d'adressage) (80b) du disque virtuel peut être réservé pour correspondre à un espace mémoire (de taille 8Ko dans l'exemple illustré sur la Figure), par exemple dans la mémoire QSPI Flash (60c) du dispositif (60) de la figure 3b, dans lequel sont stockées des mises à jour logicielles, notamment pour le logiciel utilisé par le cœur FPGA.

Dans un ou plusieurs modes de réalisation, une autre zone d'adressage (80c) du disque virtuel peut être réservée pour correspondre à un espace mémoire (dans l'exemple illustré de taille 512 octets), par exemple dans la mémoire LPDDR2 (60b) du dispositif (60) de la figure 3b, dans lequel sont stockés des registres généraux de statuts, notamment relatifs aux versions logicielles et/ou matérielles utilisées, au module CAM, etc.

Dans un ou plusieurs modes de réalisation, une autre zone d'adressage (80d) du disque virtuel peut être réservée pour correspondre à un espace mémoire (dans l'exemple illustré de taille 512 octets), par exemple dans la mémoire LPDDR2 (60b) du dispositif (60) de la figure 3b, dans lequel sont stockés des registres de statuts des zones mémoires tampons (en anglais, « buffers »), dans lesquelles les données de flux vidéo cryptés et décryptés sont stockées.

Dans un ou plusieurs modes de réalisation, une autre zone d'adressage (80e) du disque virtuel peut être réservée pour correspondre à un espace mémoire (dans l'exemple illustré de taille N x 8 Ko, N étant un entier naturel supérieur ou égal à 1), correspondant à une ou plusieurs mémoires tampons, par exemple dans la mémoire LPDDR2 (60b) du dispositif (60) de la figure 3b, dans lequel sont stockés des données de flux vidéo cryptés.

Dans un ou plusieurs modes de réalisation, une autre zone d'adressage (80f) du disque virtuel peut être réservée pour correspondre à un espace mémoire (dans l'exemple illustré de taille N x 8 Ko, N étant un entier naturel supérieur ou égal à 1), correspondant à une ou plusieurs mémoires tampons, par exemple dans la mémoire LPDDR2 (60b) du dispositif (60) de la figure 3b, dans lequel sont stockés des données de flux vidéo décryptés.

La figure 5 est un diagramme illustrant un exemple d'architecture logicielle d'un système configuré pour la mise en œuvre du procédé proposé dans le cadre non limitatif d'une application de traitement de flux vidéo.

En référence à la figure 5, l'entité CAM est configurée pour émuler un disque mémoire. Elle est par ailleurs, dans un ou plusieurs modes de réalisation, configurée pour s'interfacer avec un système d'exploitation (par exemple, Linux) sur un bus SATA. Le composant FPGA est configuré pour traiter de la gestion du protocole SATA et du routage des données dans les différents modules en fonction de l'adresse de blocs logiques (LBA) cible indiquée dans le transfert. Le logiciel exécuté par l'unité centrale de traitement (CPU) est configuré pour effectuer l'interprétation et l'exécution de commandes émises par le logiciel couches basses (LL SDK).

Au niveau de l'entité applicative (APP), le logiciel couches basses (LL SDK) est configuré pour formater les accès à émettre vers le FPGA, d'émettre les commandes SATA correspondantes et d'interpréter les réponses reçues. Il s'appuie sur le driver « SCSI Generic (sg) » pour générer les accès. Ce driver fournit un accès bas niveaux (LBA) aux disques durs.

La bibliothèque logicielle GkWare CI Stack permet d'abstraire l'utilisation du composant de décryptage CiMAX.

La librairie de développement logiciel CAM SDK est une interface de haut niveau exposant de façon uniforme toutes les fonctions du système.

L'interface logicielle entre le logiciel couches basses (LL SDK) et l'entité SATA est configurée pour fournir les fonctions (commandes) suivantes : WriteLba (LBA Index, Buffer, Taille) et ReadLba (LBA Index, Buffer, Taille).

La taille minimale d'un accès est le bloc (par exemple de taille 512 octets). En fonction de l'index LBA spécifié et du sens de l'accès, la commande sera interprétée de 5 façons différentes, décrites dans la table suivante :

**[Tableau 1]**

| LBA | WRITE | READ |
|---|---|---|
| 8388607 | Ecriture fifo TS_IN | Lecture fifo TS_OUT |
| 2097155 | | |
| 2097154 | Ecriture zone utilisateur | Lecture zone utilisateur |
| | Mapping direct LBA / Address SDRAM | |
| 2 | (2097152 ^{∗} 512 = 1Go) | |
| 1 | Commande CPU | Résultat de commande |
| 0 | N/A | N/A |

Les commandes CPU utilisées sont générées en écrivant à une adresse LBA prédéfinie (par exemple au LBA 1). Dans un ou plusieurs modes de réalisation, elles ont une taille maximum (par exemple 512 bytes), et peuvent être de deux types maximum. Type direct: la commande est exécutée et aucun résultat n'est nécessaire (une commande « write » suffit), et type indirect : la commande est exécutée et une lecture est nécessaire pour récupérer le résultat (une commande « write » suivie d'une commande « read » sont nécessaires).

Le format d'une commande est décrit par le tableau ci-dessous, dans un ou plusieurs modes de réalisation :

**[Tableau 2]**

| | | |
|---|---|---|
| Index | 32 bits | Incrémenté à chaque commande |
| Command Id | 32 bits | Identifiant de la commande |
| Data | 0 - 504 octets | - |

Dans un ou plusieurs modes de réalisation, la liste de commandes peut être celle décrite dans le tableau ci-dessous :

**[Tableau 3]**

| **Commande** | **Mnémonique** | **Id** | **Type** |
|---|---|---|---|
| Ecriture registres | REG_WR | 0x00 | Direct |
| Lecture flash | FLASH_RD | 0x01 | Direct |
| Ecriture flash | FLASH_WR | 0x02 | Direct |
| Lecture registres | REG_RD | 0x04 | Indirect |
| Lecture statut | STATUS_RD | 0x05 | Indirect |

Dans un ou plusieurs modes de réalisation, une commande (directe) d'écriture registre(s) peut être de format suivant :

**[Tableau 4]**

| | | |
|---|---|---|
| Nb | 32 bits | Nombre de registres à écrire |
| Offset registre | 32 bits | |
| Data | 32 bits | |

Dans un ou plusieurs modes de réalisation, une commande (directe) de lecture de données en mémoire Flash (FL) peut être de format suivant :

**[Tableau 5]**

| | | |
|---|---|---|
| Adresse Flash source | 32 bits | |
| Adresse SDRAM destination | 32 bits | |
| Taille | 32 bits | En octets |

Dans un ou plusieurs modes de réalisation, une commande (directe) d'écriture de données en mémoire Flash (FL) peut être de format suivant :

**[Tableau 6]**

| | | |
|---|---|---|
| Adresse Flash destination | 32 bits | |
| Adresse SDRAM source | 32 bits | |
| Taille | 32 bits | En octets |

Dans un ou plusieurs modes de réalisation, une commande (indirecte) de lecture de registre(s) (REGS) peut être de format suivant :

**[Tableau 7]**

| | | |
|---|---|---|
| Nb | 32 bits | Nombre de registres à lire |
| Offset registre | 32 bits | |
| Data | 32 bits | |

Dans un ou plusieurs modes de réalisation, une commande (indirecte) de lecture de statut peut être de format suivant :

**[Tableau 8]**

| | | |
|---|---|---|
| Version FPGA | 32 bits | |
| Version CPU | 32 bits | |
| Numéro de série | 96 bits | xxxx-xxxxx |
| Etat de la flash | 32 bits | Busy / Idle |
| Taille transfert flash courant | 32 bits | En octets |
| Position du transfert flash | 32 bits | En octets |
| courant | | |
| Log disponibles | 32 bits | Booléen |
| Niveau de la fifo TS_ OUT | 32 bits | En octets |
| Adresse Flash destination | 32 bits | |
| Adresse SDRAM source | 32 bits | |
| Taille | 32 bits | En octets |

L'interface logicielle entre 1 entité de traitement (CPU) et le FPGA est configurée pour fournir les fonctions (commandes) suivantes (FIFO_IN) :

**[Tableau 9]**

| | | |
|---|---|---|
| FIFO_ IN_ ADDRESS | 32 bits | Adresse de base |
| FIFO_IN_ SIZE | 32 bits | Taille en octets |
| FIFO_ IN_ WR_ INDEX | 32 bits | Index d'écriture en octets (maintenu par le CPU) |
| FIFO_ IN_ RD_ INDEX | 32 bits | Index de lecture en octets (maintenu par le FPGA) |
| FIFO_ IN_ ENABLE | 32 bits | Autorise le transfert des données vers le CI MAX |
| FIFO_IN_RESET | 32 bits | Remet les compteurs WR_INDEX et RD_INDEX à 0. |

Ainsi que les fonctions suivantes (FIFO_OUT) :

**[Tableau 10]**

| | | |
|---|---|---|
| FIFO_ OUT_ ADDRESS | 32 bits | Address de base |
| FIFO_ OUT_SIZE | 32 bits | Taille en octets |
| FIFO_ OUT_ WR_ INDEX | 32 bits | Index d'écriture en octets (maintenu par le FPGA) |
| FIFO_OUT_RD_INDEX | 32 bits | Index de lecture en octets (maintenu par le CPU) |
| FIFO_ OUT_ ENABLE | 32 bits | Autorise le transfert des données à partir du CI MAX |
| FIFO_ OUT_ RESET | 32 bits | Remet les compteurs WR_INDEX et RD_INDEX à 0. |

Dans un ou plusieurs modes de réalisation, le mapping mémoire est configuré avec une zone d'entrée de pile FIFO (FiFo In), par exemple de taille 64 Mo, une zone de sortie de pile FIFO (FiFo Out), par exemple de taille 64 Mo, et une zone utilisateur (ZU), par exemple de taille 1 Go.

Dans un ou plusieurs modes de réalisation, le mapping mémoire Flash (FL) est configuré avec un chargeur de programme de démarrage (en anglais, « boot loader »), un numéro de série, une option de démarrage, des opérations de vérification (en anglais, « checksum »), un code de secours FPGA, un code de secours CPU, un code destiné à être exécuté par le composant FPGA, et un code destiné à être exécuté par le CPU.

Dans un ou plusieurs modes de réalisation, un logiciel test peut être prévu pour permettre de mettre en œuvre une ou plusieurs des fonctions de la libraire SDK : Transferts mémoire : Lecture mémoire utilisateur (adresse, taille), écriture dans un fichier, et lecture d'un fichier, écriture dans la mémoire (adresse). Transferts flash : Lecture flash (adresse, taille), écriture dans un fichier, Lecture d'un fichier, écriture dans la flash (adresse), Décryptage d'un fichier TS (Lecture du fichier, Extraction des informations utiles (PMT, descripteurs), Configuration du module, Streaming du fichier, Récupération du flux décrypté, Enregistrement dans un fichier), Accès aux menus (Consultation, Navigation).

Dans un ou plusieurs modes de réalisation, les modes opératoires pour les transferts de données de flux vidéo (TS) peuvent être définis comme suit : (1) Envoi TS crypté (HOST vers fifo TS_IN) : Le HOST effectue un write dans la plage LBA correspondant aux fifos. Le processeur (CPU) programme la réception des données vers l'adresse FIFO_IN_ADDRESS + FIFO_IN_WR_INDEX. Lorsque le transfert est terminé, le CPU met à jour le registre FIFO_IN_WR_INDEX. (2) Envoi TS crypté (fifo TS_IN vers CiMAX) : Tant que les registres FIFO_IN_WR_INDEX et FIFO_IN_RD_INDEX sont différents, le FPGA envoi les données contenues entre les 2 curseurs vers le CiMAX. Il met à jour le registre FIFO_IN_RD_INDEX. (3) Réception TS décrypté (CiMAX vers fifo TS_OUT) : Le FPGA recoit les données venant du CiMAX. Il les tranfert vers l'adresse FIFO_OUT_FIFO_OUT_ADDRESS + FIFO_OUT_WR_INDEX. (4) Réception TS décrypté (fifo TS_OUT vers HOST) : Le HOST émet périodiquement des commandes STATUS_RD. Le CPU met à jour le champ « Niveau de la fifo TS_OUT » dans la réponse en réalisant l'opération FIFO_OUT_WR_INDEX - FIFO_OUT_RD_INDEX. Le HOST effectue un read dans la plage LBA correspondante aux fifos de taille inférieure ou égale au niveau de la fifo. Le CPU programme l'émission des données depuis l'adresse FIFO_OUT_ADDRESS + FIFO_OUT_RD_INDEX. Lorsque le transfert est terminé, le CPU met à jour le registre FIFO_OUT_RD_INDEX.

Dans un ou plusieurs modes de réalisation, les modes opératoires pour les transferts depuis et vers la mémoire Flash peuvent être définis comme suit : (1) Envoi de données dans la mémoire flash : Le HOST effectue un write dans la plage LBA correspondant à la zone utilisateur. Le CPU programme la réception des données vers l'adresse désignée. Le HOST émet une commande FLASH_WR en utilisant comme source, l'adresse SDRAM du transfert précédent. Le CPU met à jour les champs concernant concernant la flash dans la commande de statut et démarre le transfert. Le HOST émet périodiquement des commandes STATUS_RD jusqu'à ce que le champs « Etat de la flash » repasse à « Idle ». (2) Lecture de données à partir de la mémoire flash : Le HOST émet une commande FLASH_RD en utilisant comme destination, une adresse SDRAM de la zone utilisateur. Le CPU met à jour les champs concernant concernant la flash dans la commande de status et démarre le transfert. Le HOST émet périodiquement des commandes STATUS_RD jusqu'à ce que le champs « Etat de la flash » repasse à « Idle ». Le HOST effectue un read dans la plage LBA correspondant à l'adresse SDRAM du transfert précédent.

Dans un ou plusieurs modes de réalisation, le module (CiMAX) de décryptage de flux vidéo (TS) peut être configuré comme suit : Les accès registres nécessaires à la configuration du CiMAX peuvent être générés par la bibliothèque GkWare CI Stack. Lorsque cette bibliothèque a besoin d'accéder au composant CiMAX, elle appelle des callbacks contenant la liste des accès registre à effectuer. Pour les écritures registres : Le HOST émet une commande REG_WR. Le CPU effectue les accès sur le bus SPI. Pour les lectures registres : Le HOST émet une commande REG_RD. Le CPU effectue les accès sur le bus SPI. Le HOST émet une commande de lecture au LBA 1. Le CPU renvoit les résultats.

### Application industrielle

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé proposé et le dispositif pour la mise en œuvre d'un mode de réalisation du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous-combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Procédé de communication de données, comprenant :
configurer une première interface applicative couplée de manière opérationnelle à une interface de gestion de stockage de données, pour définir une correspondance entre un message de données applicatif et une zone d'adressage mémoire gérée par l'interface de gestion de stockage de données ;
générer un message de commande de stockage de données sur la base de la zone d'adressage mémoire et du message de données applicatif ; et
émettre, par la première interface applicative, vers l'interface de gestion de stockage de données le message de commande de stockage de données, pour transmettre, au travers de l'interface de gestion de stockage de données, le message de données applicatif vers une deuxième interface applicative.

2. Procédé selon la revendication 1, dans lequel le message de commande de stockage de données est une requête d'écriture de données correspondant au message de données applicatif dans la zone d'adressage.

3. Procédé selon l'une quelconque des revendications 1 ou 2, dans lequel le message de données applicatif est encapsulé dans les données écrites dans la zone d'adressage.

4. Procédé de communication de données, comprenant :
configurer une deuxième interface applicative pour définir une correspondance entre un message de données applicatif et une zone d'adressage mémoire gérée par l'interface de gestion de stockage de données ;
recevoir, depuis l'interface de gestion de stockage de données, un message de commande de stockage de données ; et
obtenir, sur la base de la zone d'adressage mémoire et du message de commande de stockage de données, le message de données applicatif en provenance d'une première interface applicative.

5. Procédé selon la revendication 4, dans lequel le message de commande de stockage de données est une requête de lecture de données correspondant au message de données applicatif dans la zone d'adressage.

6. Procédé selon la revendication 5, dans lequel le message de données applicatif est encapsulé dans les données lues dans la zone d'adressage.

7. Dispositif, comprenant une deuxième unité d'interface applicative comprenant une interface de communication de données couplée de manière opérationnelle à un processeur, dans lequel le processeur est configuré pour, lorsque la deuxième unité d'interface applicative est couplée à une interface de gestion de stockage de données d'un système informatique, mettre en œuvre un procédé selon l'une quelconque des revendications 1 à 6.

8. **evendication 8]** Dispositif selon la revendication 7, dans lequel la deuxième unité d'interface applicative est configurée pour, lorsque la deuxième unité d'interface applicative est couplée à l'interface de gestion de stockage de données du système informatique, échanger des données avec une première unité d'interface applicative configurée pour être mise en œuvre par un processeur du système informatique, les première et deuxième unités d'interface applicative formant respectivement des première et deuxième interfaces applicatives de l'interface de gestion de stockage de données.

9. Dispositif selon l'une quelconque des revendications 7 et 8, comprenant en outre une unité applicative couplée de manière opérationnelle à la deuxième unité d'interface applicative, et configurée pour la mise en œuvre d'une application de traitement de données à traiter reçues de la deuxième unité d'interface applicative.

10. Dispositif selon la revendication 9, dans lequel l'unité applicative est configurée pour effectuer un traitement d'un flux vidéo reçu de la deuxième unité d'interface applicative, le traitement étant relatif à un ou plusieurs traitements parmi la compression, la décompression, l'encodage, le décodage, l'encryptage et le décryptage.

11. Unité d'interface applicative, configurée pour, lorsque l'unité d'interface applicative est mise en œuvre par un processeur d'un système informatique, mettre en œuvre un procédé selon l'une quelconque des revendications 1 à 6.

12. Programme d'ordinateur, chargeable dans une mémoire associée à un processeur, et comprenant des portions de code pour la mise en œuvre des étapes d'un procédé selon l'une quelconque des revendications 1 à 6 lors de l'exécution dudit programme par le processeur.

13. Ensemble de données représentant, par exemple par voie de compression ou d'encodage, un programme d'ordinateur selon la revendication 12.

14. Support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à mettre en œuvre le procédé de l'une quelconque des revendications 1 à 6.
